# EUROPÄISCHE PATENTSCHRIFT

(11) **EP 3 700 694 B1**
(45) Veröffentlichungstag und Bekanntmachung des Hinweises auf die Patenterteilung: **11.08.2021**
(21) Anmeldenummer: 18774039.4
(22) Anmeldetag: 24.09.2018
(51) Int. Cl.: B23D 15/02, B22D 11/126, B21B 15/00, B23D 25/08, B23D 25/10, B23D 33/08, B23D 33/10

(54) **VERFAHREN ZUM TRENNEN EINES GIESSSTRANGES ODER ZWISCHENBANDES MITTELS EINER SCHERE**
METHOD FOR CUTTING A CAST STRAND OR INTERMEDIATE STRIP USING SHEARS
PROCÉDURE DE SÉPARATION D'UNE BANDE COULÉE OU INTERMÉDIAIRE AVEC DES CISEAUX

(30) Priorität: 27.10.2017 DE 102017219289
(43) Veröffentlichungstag der Anmeldung: 02.09.2020
(73) Patentinhaber: SMS Group GmbH, 40237 Düsseldorf (DE)
(72) Erfinder: NEUMANN, Luc, 40223 Düsseldorf (DE); PANDER, Michael, 50739 Köln (DE); KINTSCHER, Björn, 42551 Velbert (DE); EHLS, Bernhard, 57271 Hilchenbach (DE)
(74) Vertreter: Kross, Ulrich
(86) Internationale Anmeldenummer: PCT/EP2018/075759
(87) Internationale Veröffentlichungsnummer: WO 2019/081142

(56) Entgegenhaltungen:
- EP-A1- 0 940 208
- JP-A- H08 132 107
- JP-A- S59 224 209
- US-A- 4 175 459

## Beschreibung

Die Erfindung betrifft ein Verfahren zum Trennen eines Gießstranges oder Zwischenbandes mittels einer Schere.

Ein Verfahren der genannten Art ist beispielsweise aus der US 4 175 459 A bekannt. Ähnliche Lösungen zeigen die JP H08 132107 A, die JP S59 224209 A und die EP 0 940 208 A1.

Bei kontinuierlich angeliefertem Walzgut erfolgt vor dem Walzprozess eine Trennung in einzelne Stücke, beispielsweise im Falle einer Dünnbrammen-Gießwalzanlage, wobei die einzelnen Stücke jeweils zu mindestens einem Band gewalzt werden.

Die Greifbedingung, die für einen problemlosen Einzug einer Bramme in ein Walzgerüst erfüllt sein muss, ergibt sich daraus, dass der (Coulombsche) Reibkoeffizient größer oder gleich sein muss als die Wurzel aus dem Quotienten der Dickenabnahme zum Radius der Walzen des Walzgerüsts. In der betrieblichen Praxis ist die Reibung eine Systemeigenschaft, die von vielen Einflussgrößen abhängig ist, so dass sich gegenüber dem rechnerischen Greifwinkel durchaus abweichende (insbesondere auch kleinere) Greifwinkel ergeben können. Zu den Einflussgrößen gehören die Oberflächenbeschaffenheit (vorrangig die Zunderschichten), die Relativgeschwindigkeit, die Temperaturen und die Werkstoffpaarung von Werkstück und Werkzeug (Arbeitswalzen). Bei der Werkstoffpaarung spielt insbesondere die chemische Analyse des Werkstückes eine Rolle.

Insbesondere Dünnbrammen erfahren im ersten Warmwalzstich häufig eine große bezogene Dickenabnahme, was die kritischste Größe für das Erfüllen der Greifbedingung ist. In Fällen, in denen die Greifbedingung nicht erfüllt ist, sind zusätzliche Maßnahmen zum Walzen notwendig. Das unterbricht den angestrebten kontinuierlichen Produktionsprozess und erfordert ein manuelles Eingreifen der Bedienermannschaft.

Dabei kann man entweder mit Antrieben einen Vorschub erzeugen, der letztlich die Reibung nach einer gewissen Zeit erhöht und damit das Greifen durch die Walzen ermöglicht. Eine andere Möglichkeit ist es, einen anderen Stichplan zu verwenden und weniger Abnahme im ersten Stich zu planen. Dies führt allerdings dazu, dass die ursprünglich geplante Warmbanddicke unter Umständen nicht erreicht werden kann.

Problemen beim Erfüllen der Greifbedingung anlagenseitig vorzubeugen, ist technisch aufwendig und kostspielig, da man größere Arbeitswalzendurchmesser vorsehen muss, die wiederum ein höheres Antriebsmoment erfordern, das durch einen stärkeren Antriebsstrang (Antrieb, Getriebe und Spindel) übertragen werden muss.

Zum Ablängen des Gießstranges bzw. des Zwischenbandes kommt häufig eine Pendelschere zum Einsatz, die allerdings bislang ausschließlich zum Schneiden der Bramme eingesetzt wird.

Im Stand der Technik sind verschiedene Lösungen bekannt, die häufig darauf abstellen, den noch schmelzflüssigen Kern im Gießstrang durch eine äußere Formgebung abzudichten, um ein Ablängen des Gießstranges vornehmen zu können, ohne dass flüssiges Metall ausläuft. Für die Umformung des Kopfendes des Gießstranges sind weitere Lösungen bekannt, die teilweise auf verfahrbare Vorrichtungen abstellen, die sich während des Umformprozesses bewegen. Insoweit wird Bezug genommen auf die oben genannte JP H08 132107 A, auf die JP 10180428 A, auf die JP 56105857 A, auf die JP 58074202 A, auf die JP 2014 065045 A und auf die JP 2016 083662 A. In der US 4 347 724 A wird ein Verfahren beschrieben, um Langprodukte ("bars", "billets") umzuformen, während diese Lösung nur bedingt bei der Flachproduktherstellung und namentlich bei der Produktion von Dünnbrammen tauglich ist. Zudem stellt die hier beschriebene Lösung auf eine Einrichtung mit Messern ab, die zueinander ausgebildete Gegenstücke ("männlich" / "weiblich") einsetzt. Aufgrund der hier vorgeschlagenen kreisrunden Ausführung der Werkzeuge ist die dort beschriebene Lösung nicht für die Verarbeitung von Dünnbrammen anwendbar.

In nachteiliger Weise können die oben geschilderten Probleme zu Produktionsunterbrechungen führen oder das Walzen eines Warmbandes, welches nicht die geforderten Abmessungen erreicht, notwendig machen. Die anlagenseitigen Lösungen sind teuer und aufwendig in der Anschaffung und nicht immer gut nachrüstbar.

Der Erfindung liegt daher die **Aufgabe** zugrunde, ein Verfahren der eingangs genannten Art so fortzubilden, dass ein verbessertes Walzen des Abschnitts mit einer großen Dickenabnahme begünstigt wird. Damit sollen die oben genannten Nachteile vermieden werden.

Die **Lösung** dieser Aufgabe durch die Erfindung ist dadurch gekennzeichnet, dass das Verfahren die Schritte aufweist:
a) Zuführen eines Teils des vollständig durcherstarrten Gießstranges oder Zwischenbandes in Förderrichtung des Gießstranges oder Zwischenbandes vor die Schere;
b) Platzieren eines ersten Scherenmessers der Schere auf die eine Oberfläche des Gießstranges oder Zwischenbandes und Platzieren eines zweiten Scherenmessers der Schere auf die andere Oberfläche des Gießstranges oder Zwischenbandes und Durchführen eines Schnitts durch Ausführung einer relativen Bewegung der beiden Scherenmesser, wobei sich mindestens eines der Scherenmesser in einer vorgeschobenen Position befindet;
c) Anstauchen einer keilförmigen Kontur an den Anfang des sich in Förderrichtung vor der Schere befindlichen Gießstranges oder Zwischenbandes, indem auf beide Oberflächen des Gießstranges oder Zwischenbandes ein Stauch- oder ein Stauch- und Prägewerkzeug gepresst wird, so dass die Dicke des Anfangs des Gießstranges oder Zwischenbandes gegenüber der Dicke des Gießstranges oder Zwischenbandes vermindert ist, wobei das eine Teil des Stauch- oder ein Stauch- und Prägewerkzeugs durch eines der Scherenmesser gebildet wird,
wobei eine separate Anstellmöglichkeit von Werkzeug und Messer gegeben ist, wodurch die Stauch- oder Stauch- und Prägefunktion zu- und abschaltbar ist, so dass die Schere auch nur zum Schneiden nutzbar ist.

Das Stauchwerkzeug kann dabei zum Prägen geeignete Erhöhungen aufweisen, durch die aus dem Stauchvorgang ein kombinierter Stauch- und Prägevorgang wird. Durch das Einprägen wird die Oberfläche des Gießstranges bzw. Zwischenbandes an dieser Stelle so gestaltet, dass die Reibungseigenschaften für den nachfolgenden Walzprozess vergrößert werden.

Das Stauchen oder Stauchen mit Prägen der keilförmigen Kontur gemäß obigem Schritt c) erfolgt dabei bevorzugt, während sich das mindestens eine Scherenmesser noch in der vorgeschobenen Position gemäß obigem Schritt b) befindet.

Beim Anstauchen der keilförmigen Kontur gemäß obigem Schritt c) kann zumindest ein Teil des verdrängten Materials des Endes des Gießstranges in einen Aufnahmeraum gefördert werden, der sich in einem der Scherenmesser befindet.

Nach dem Anstauchen der keilförmigen Kontur gemäß obigem Schritt c) kann gemäß einer vorteilhaften Fortbildung der Erfindung das sich in der vorgeschobenen Position gemäß obigem Schritt b) befindliche Scherenmesser um eine horizontale Achse geschwenkt werden, die senkrecht zur Förderrichtung steht, bevor das Scherenmesser in seine Ausgangslage zurückgezogen wird. In diesem Falle ist bevorzugt vorgesehen, dass der Schwenkwinkel zwischen -15° und 15° beträgt.

Beim Anstauchen der keilförmigen Kontur gemäß obigem Schritt c) kann eine Kontur mit geraden Flanken, gesehen in eine horizontale Richtung senkrecht zur Förderrichtung, erzeugt werden. Es ist allerdings auch möglich, dass beim Anstauchen der keilförmigen Kontur gemäß obigem Schritt c) eine Kontur mit balligen Flanken, gesehen in eine horizontale Richtung senkrecht zur Förderrichtung, erzeugt wird.

Als Schere kann eine Pendelschere verwendet werden. Ferner kann als Schere eine fliegende Schere oder eine Trommelschere verwendet werden.

Als Schere wird vorzugsweise eine solche mit mechanischem Kurbelantrieb des oder der Scherenmesser verwendet.

Gemäß einer Weiterbildung ist vorgesehen, dass eine Verstellmöglichkeit des oberen und/oder unteren Werkzeuges zur Anpassung an die jeweils vorliegende Gießstrangdicke oder Zwischenbanddicke gegeben ist.

Ferner kann auch eine Verstellmöglichkeit des oberen und/oder unteren Werkzeuges zum Einstellen der Mindeststauchdicke aufgrund der Greifbedingungsberechnung gegeben sein.

Eine Weiterbildung sieht vor, dass von einem Walzwerkleitsystem über ein Rechnernetzwerk einer Maschinensteuerung Mess- und/oder Prozessdaten und/oder daraus berechnete Größen übermittelt werden, wobei der Schneid- und/oder der Präge- oder Anstauchvorgang von der Maschinensteuerung in Abhängigkeit dieser Daten gesteuert wird.

Dabei kann die Position aller zum Einsatz kommenden Werkzeuge zum Schneiden bzw. Anstauchen an die Dicke des Gießstranges bzw. des Zwischenbandes angepasst werden.

Dabei können auch die Greifbedingungen herangezogen werden, um die genannten Werkzeuge bzw. deren Teile in ihrer Position entsprechend anzupassen.

Vorteilhaft ist eine separate Anstellmöglichkeit von Schneidwerkzeugen und Präge- bzw. Stauchwerkzeugen.

Die vorgeschlagene Schere ist also so ausgebildet, dass gleichzeitig mit dem (Dünn-) Brammenschnitt durch einen Stauch- bzw. Prägevorgang die vordere Stirnseite der Bramme in der Dicke verjüngt wird, um das nachfolgende Walzen zu begünstigen.

Nach dem vorliegenden Konzept wird also bei dem erforderlichen Brammenschnitt, insbesondere in einer Dünnbrammen-Gießwalzanlage, durch die vorgeschlagene Vorgehensweise insbesondere unter Verwendung einer Pendelschere gleichzeitig mit dem Trennen des Gießstranges bzw. der Bramme ein Keil durch einen Stauchvorgang an der vorderen Stirnseite der mit dem nächsten Schnitt entstehenden (Dünn)Bramme eingebracht. Dieser Keil erleichtert das Sicherstellen der Greifbedingung beim (Warm)Walzen; dies ergibt eine höhere Ausnutzung und Ausbringung der Produktionsanlagen.

Die eingebrachte Profilierung ist keilförmig ausgebildet, d. h. es wird eine keilförmige Kontur angestaucht. Dies setzt allerdings nicht zwingend (von der Seite gesehen) gerade Flanken der genannten Kontur voraus. Es sind auch andere Geometrien möglich, beispielsweise bogenförmige, polygonale oder kreissegmentförmige Flanken der keilförmigen Kontur.

Eine Pendelschere ist beispielsweise in der EP 0 940 208 A1 näher beschrieben, auf die insoweit ausdrücklich Bezug genommen wird.

Die ohnehin in Dünnbrammenanlagen vorhandene Schere wird also erfindungsgemäß um eine Funktion erweitert, die das Erfüllen der Greifbedingung beim sich anschließenden Walzen vereinfacht. Dadurch kann eine höhere Betriebssicherheit erreicht werden. In Sonderfällen kann ein Warmwalzwerk günstiger (leichter) ausgelegt werden, d. h. es ist ein niedrigerer Arbeitswalzendurchmesser möglich und folglich ein weniger massiv ausgelegter Antriebsstrang.

Das vorgeschlagene Verfahren wird bevorzugt bei Flachprodukten im Dicken-Bereich von 5 mm bis 300 mm eingesetzt sowie bei entsprechenden Langprodukten, bei denen eine ähnliche Problematik vorliegt, wie sie oben dargestellt ist.

Dabei kann eine Ausgestaltung vorgesehen werden, bei der das Anstauchen der keilförmigen Kontur zuschaltbar und abschaltbar ist; darüber hinaus kann sowohl eine Anpassung an die aktuelle Gießdicke, als auch an die seitens der Greifbedingung des Walzwerkes notwendige Mindestanstauchdicke vorgesehen werden. Demgemäß kann bei abgeschalteter Funktion die Schere wie bisher üblich betrieben werden oder bei zugeschalteter Funktion die erläuterte Verfahrensweise gefahren werden. Die abgeschaltete Betriebsweise kann zum Beispiel dann gewählt werden, wenn es aufgrund der Stichpläne nicht erforderlich ist, die keilförmige Verjüngung an den Brammen einzubringen.

Die bevorzugt zum Einsatz kommende Pendelschere kann modular aufgebaut werden, wobei keilförmige Profile mit anwendungsfallabhängiger unterschiedlicher Geometrie realisiert werden können, indem geeignete Schnellwechselvorrichtungen für die Werkzeuge vorgesehen werden.

Üblicherweise ist der Winkel der Staucherplatten so gewählt, dass die Umformung selbsthemmend ist. Sollten die Verhältnisse (bei niedriger Reibung, größeren Winkeln oder beiden) nicht mehr selbsthemmend sein (an der Grenze der Selbsthemmung oder leicht lösbar), dann ist die zusätzliche Maßnahme zu ergreifen, die Staucherplatten werkstückseitig aufzurauen, Rillen vorzusehen, Spitzen vorzusehen oder andere geeignete Maßnahmen. Eine in Quer- oder Normalenrichtung gekrümmte Form kann vorgesehen werden für die Stempelgeometrie beispielsweise zur Anpassung an Reibungsverhältnisse oder des plastischen Fließ- oder Scherverhaltens.

Das Obermesser der Schere kann dabei an die Stauchfunktion (Schmiede- bzw. Prägefunktion) derart angepasst sein, dass durch geeignete konstruktive Gestaltung des Messerbalkens Raum vorhanden ist, in den der Werkstoff des Gießstranges oder Zwischenbandes nach dem Schneidvorgang und während des Stauchvorgangs fließen kann.

Zusätzlich kann durch das vorgenannte Schwenken, d. h. insbesondere durch die Pendelbewegung der Schere, sichergestellt werden, dass nach dem Schneid- und Stauchvorgang in der Rückwärtsbewegung der Messer das Scherenpendel so in der Bewegungsrichtung des Schnittgutes voreilt, dass eine Behinderung der Rückwärtsbewegung des Messers durch das gestauchte Volumen vermieden wird.

Gemäß einer Fortbildung der Erfindung ist vorgesehen, dass die Maximalkraft durch eine geeignete Maßnahme zum Schutz des Scheren-Schlittens begrenzt wird.

Für den beschriebenen Scherenstaucher kann eine geeignete Steuerung vorgesehen werden, die über einen geeigneten Datenträger verfügt, der einen Maschinencode enthalten kann. Diese Steuerung kann anhand der Prozessplanungsmodelle und über die voraussichtlichen Stichpläne und weitere Randbedingungen automatisch entscheiden, wann die erläuterte Stauchfunktion der keilförmigen Kontur zu- und wann sie abgeschaltet wird; durch die Steuerung ausgeführt werden kann auch die Anpassung an die aktuelle Gießdicke sowie an die seitens des Walzwerkes notwendige Mindestanstauchdicke. Diese Art der Steuerung kann auf der Basis von vorgeschalteten Mess- und Prozessdaten oder (daraus) berechneter Größen erfolgen (beispielsweise auf der Basis der Temperatur von Messung/Erstarrungsmodell oder einer chemischen Analyse des Materials oder der Dicke des Gießstranges aus einer Messung bzw. einem Prozessmodell der Gießmaschine oder der Vorgaben zur Mindeststauchdicke aus dem Prozessrechner des Walzwerkes).

In den Zeichnungen ist ein Ausführungsbeispiel der Erfindung dargestellt. Es zeigen:
- Fig. 1: schematisch eine Produktionsanlage für die Herstellung von Brammen bzw. eines Gießstranges oder Zwischenbandes,
- Fig. 2: schematisch eine Schere als Bestandteil der Anlage nach Figur 1, wobei der Start eines Schneidvorgangs dargestellt ist,
- Fig. 3: schematisch die Schere, wobei ein Stauch- bzw. kombinierter Stauch- und Prägevorgang des Endes des Gießstranges, einer Bramme oder eines Zwischenbandes dargestellt ist,
- Fig. 4: schematisch die Schere, wobei ein Rückhub mit seitlicher Entlastung dargestellt ist,
- Fig. 5: schematisch die Schere, wobei die Öffnungsphase dargestellt ist, und
- Fig. 6: schematisch die Schere, wobei die Bewegung in die Ausgangslage dargestellt ist.

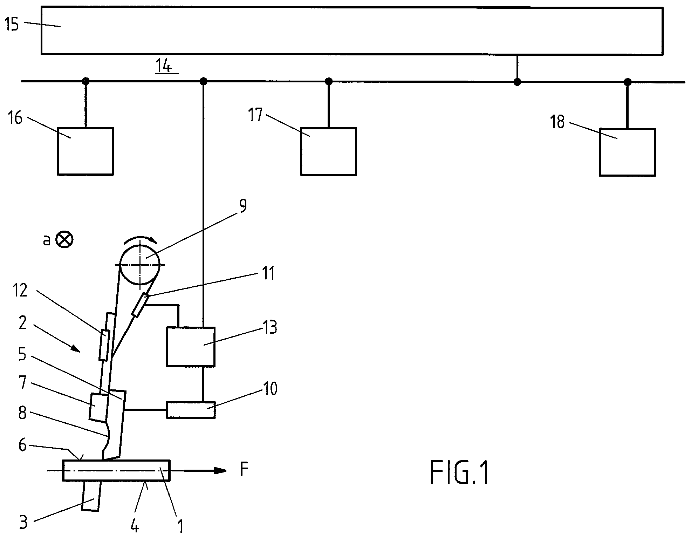

In Figur 1 ist schematisch die Schere 2 einer Gießwalzanlage dargestellt, mit der von einem Gießstrang oder Zwischenband 1 ein Abschnitt in Form einer Bramme oder eines Zwischenbandabschnitts abgetrennt wird, um besagten Abschnitt im weiteren Verlauf des Prozesses einem Walzvorgang zu unterziehen. Der Gießstrang bzw. das Zwischenband 1 wird dabei in eine (horizontale) Förderrichtung F gefördert.

Die Schere 2 hat ein erstes (unteres) Scherenmesser 3 sowie ein zweites (oberes) Scherenmesser 5, mit denen der Schneidvorgang durchgeführt wird. Die Schere 2 ist dabei als Pendelschere ausgebildet; zu Details wird auf die EP 0 940 208 A1 verwiesen, die hierzu nähere Informationen enthält.

Zur Durchführung des Schneidvorganges wird das Scherenmesser 3 an der unteren Oberfläche 4 des Gießstranges bzw. Zwischenbandes 1 positioniert. Auf die obere Oberfläche 6 des Gießstranges oder Zwischenbandes 1 wird das Scherenmesser 5 aufgesetzt. Durch eine Relativbewegung zwischen den beiden Scherenmessern 3, 5 wird der Schneidvorgang ausgeführt. Insoweit entspricht die Vorgehensweise dem Stand der Technik.

In der Darstellung gemäß Figur 1 ist eine Maschinensteuerung 13 für die Schere 2 zu erwähnen, die auch Anstelleinrichtungen 10, 11 und 12 ansteuert. Mit der Anstelleinrichtung 10 kann eine Schwenkbewegung der Scherenwerkzeuge um eine Schwenkachse a erzeugt werden, die horizontal ausgerichtet ist und auf der Zeichenebene von Figur 1 senkrecht steht. Mit der Anstelleinrichtung 11 wird der Verfahrweg der Messer eingestellt und mit der Anstelleinrichtung 12 wird ein Teil des Stauchwerkzeuges in Eingriff gebracht bzw. der Stauchbetrag eingestellt. Bevorzugt sind die Anstelleinrichtungen als Hydraulikzylinder ausgeführt. Jedoch sind weitere Ausführungen beispielsweise als elektrischer Stellantrieb oder Linearführung oder Kombination denkbar.

Schematisch dargestellt ist in Figur 1 noch ein Rechnernetzwerk 14, ein übergeordnetes Leitsystem 15, ein Stahlwerksleitsystem 16, ein Stranggießleitsystem 17 sowie ein Walzwerksleitsystem 18.

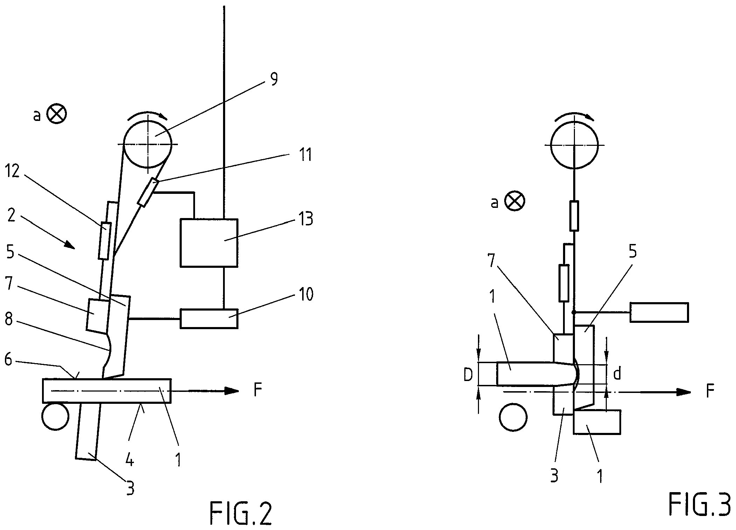

Die Anordnung gemäß den Figuren 2 bis 6 stellt einen Scherenstaucher dar, mit dem der Anfang des Gießstranges bzw. Zwischenbandes 1 mit einem Keil versehen wird, um das nachfolgende Walzen zu erleichtern. Die einzelnen Figuren zeigen die Abfolge der Verfahrensweise der Schere 2.

In Figur 2 ist der Start des Schneidvorgangs illustriert. Das obere und das untere Scherenmesser 5 bzw. 3 sind auf die jeweiligen Oberflächen 6 bzw. 4 des Gießstranges bzw. Zwischenbandes 1 aufgesetzt. Der Schnitt wird ausgeführt, in dem das obere Scherenmesser 5 nach unten gedrückt wird. Hierfür ist ein Kurbeltrieb 9 vorhanden, der das Scherenmesser 5 betätigt, wobei die Anstelleinrichtung 11 für die geeignete Positionierung des Messers relativ zum Gießstrang oder Zwischenband sorgt.

In Figur 3 ist der wesentliche Kern der vorliegenden Erfindung illustriert: Hiernach fungiert das untere Scherenmesser 3 als Teil eines Stauch-/Prägewerkzeugs; von oben wirkt ein weiterer Teil 7 eines Stauch-/Prägewerkzeugs in Form eines Schmiedesattels, so dass am Anfang des abgeschnittenen Gießstranges oder Zwischenbandes 1 eine keilförmige Kontur geformt wird, gesehen in horizontale Richtung und senkrecht zur Fördererrichtung F, also in Blickrichtung der Darstellung gemäß Figur 3.

Wie aus Figur 3 hervorgeht wird damit die Dicke D des Gießstranges bzw. Zwischenbandes 1 auf einen verminderten Wert reduziert, nämlich auf die Dicke d am Ende des Gießstranges bzw. Zwischenbandes 1, wobei das Maß der Reduktion über eine Anstelleinrichtung 12 einstellbar ist.

Im Scherenmesser 5 ist hierbei ein Aufnahmeraum 8 (Kavität) ausgebildet, der dazu geeignet ist, während des Stauch- bzw. Prägevorgangs verdrängtes Material des Gießstranges bzw. Zwischenbandes 1 aufzunehmen.

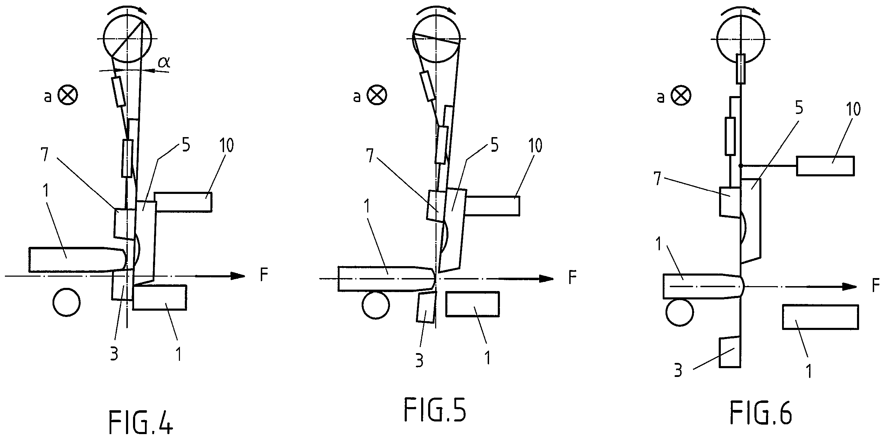

Aus Figur 4 geht hervor, dass beim Rückhub des Scherenmessers 5 eine Schwenkbewegung um die Schwenkachse a um einen Schwenkwinkel erfolgen kann, um eine Entlastung der Werkzeuganordnung zu erreichen. Der Schwenkwinkel beträgt dabei einige wenige Grad, was allerdings bereits effektiv zur Entlastung ausreicht. Der Anstellzylinder 10 bewerkstelligt dabei das Schwenken der Anordnung um den Schwenkwinkel.

Die Öffnungsphase ist in Figur 5 dargestellt. Gemäß Figur 6 wird die Anordnung in die Ausgangslage zurückgeführt, um für den nächsten Schnitt bereit zu sein.

Der so abgetrennte Gießstrang bzw. das Zwischenband 1 wird anschließend gewalzt. Nachdem das Kopfende beim Scherenschnitt mit der keilförmigen Kontur versehen ist und damit mit einer reduzierten Dicke d, liegen verbesserte Einzugsbedingungen für das Walzen vor, d. h. die Greifbedingung ist leichter zu erfüllen.

Angedeutet in den Figuren ist, dass das Ende des Gießstranges 2 eine keilförmige Kontur aufweist, die gerade Flanken hat (gesehen in den Darstellungen gemäß den Figuren). Allerdings kann es sich dabei auch um ballige oder polygonale Abschnitte handeln, die also nicht notwendigerweise linear (gerade) ausgebildet sein müssen.

### Bezugszeichenliste:

- 1: Gießstrang / Zwischenband
- 2: Schere
- 3: erstes Scherenmesser / Teil des Stauch- oder Stauch- und Prägewerkzeugs
- 4: Oberfläche des Gießstranges oder Zwischenbandes
- 5: zweites Scherenmesser
- 6: Oberfläche des Gießstranges oder Zwischenbandes
- 7: Teil des Präge- oder Anstauchwerkzeugs (Schmiedesattel)
- 8: Aufnahmeraum
- 9: Kurbeltrieb
- 10: Anstelleinrichtung
- 11: Anstelleinrichtung
- 12: Anstelleinrichtung
- 13: Maschinensteuerung
- 14: Rechnernetzwerk
- 15: übergeordnetes Leitsystem
- 16: Stahlwerksleitsystem
- 17: Stranggießleitsystem
- 18: Walzwerksleitsystem

- F: Förderrichtung
- d: Dicke des Endes des Gießstranges oder Zwischenbandes
- D: Dicke des Gießstranges oder Zwischenbandes
- a: Schwenkachse
- □: Schwenkwinkel

## Patentansprüche

1. Verfahren zum Trennen eines Gießstranges oder Zwischenbandes (1) mittels einer Schere (2), welches die Schritte aufweist:
a) Zuführen eines Teils des vollständig durcherstarrten Gießstranges oder Zwischenbandes (1) in Förderrichtung (F) des Gießstranges oder Zwischenbandes (1) vor die Schere (2);
b) Platzieren eines ersten Scherenmessers (3) der Schere (2) auf die eine Oberfläche (4) des Gießstranges oder Zwischenbandes (1) und Platzieren eines zweiten Scherenmessers (5) der Schere (2) auf die andere Oberfläche (6) des Gießstranges oder Zwischenbandes (1) und Durchführen eines Schnitts durch Ausführung einer relativen Bewegung der beiden Scherenmesser (3, 5), wobei sich mindestens eines der Scherenmesser (3) in einer vorgeschobenen Position befindet;
c) Stauchen oder Stauchen mit Prägen einer keilförmigen Kontur an das Ende des sich in Förderrichtung (F) vor der Schere (2) befindlichen Gießstranges oder Zwischenbandes (1), indem auf beide Oberflächen (4, 6) des Gießstranges oder Zwischenbandes (1) ein Stauch- oder ein Stauch- und Prägewerkzeug (7, 5) gepresst wird, so dass die Dicke (d) des Anfangs des Gießstranges oder Zwischenbandes (1) gegenüber der Dicke (D) des Gießstranges oder Zwischenbandes (1) vermindert ist, wobei das eine Teil des Stauch- oder ein Stauch- und Prägewerkzeugs (5) durch eines der Scherenmesser gebildet wird,
wobei eine separate Anstellmöglichkeit von Werkzeug und Messer gegeben ist, wodurch die Stauch- oder Stauch- und Prägefunktion zu- und abschaltbar ist, so dass die Schere auch nur zum Schneiden nutzbar ist.

2. Verfahren nach Anspruch 1, wobei das Stauchen oder Stauchen mit Prägen der keilförmigen Kontur gemäß Schritt c) von Anspruch 1 erfolgt, während sich das mindestens eine Scherenmesser (3) noch in der vorgeschobenen Position gemäß Schritt b) von Anspruch 1 befindet.

3. Verfahren nach Anspruch 2, wobei beim Stauchen oder Stauchen mit Prägen der keilförmigen Kontur gemäß Schritt c) von Anspruch 1 zumindest ein Teil des verdrängten Materials des Endes des Gießstranges oder Zwischenbandes (1) in einen Aufnahmeraum (8) gefördert wird, der sich in einem der Scherenmesser (5) befindet.

4. Verfahren nach einem der Ansprüche 1 bis 3, wobei nach dem Stauchen oder Stauchen mit Prägen der keilförmigen Kontur gemäß Schritt c) von Anspruch 1 das sich in der vorgeschobenen Position gemäß Schritt b) von Anspruch 1 befindliche Scherenmesser (3) um eine horizontale Achse (a) geschwenkt wird, die senkrecht zur Förderrichtung (F) steht, bevor das Scherenmesser (3) in seine Ausgangslage zurückgezogen wird.

5. Verfahren nach Anspruch 4, wobei der Schwenkwinkel (α) zwischen -15° und 15° beträgt.

6. Verfahren nach einem der Ansprüche 1 bis 5, wobei beim Stauchen oder Stauchen mit Prägen der keilförmigen Kontur gemäß Schritt c) von Anspruch 1 eine Kontur mit geraden Flanken, gesehen in eine horizontale Richtung senkrecht zur Förderrichtung (F), erzeugt wird.

7. Verfahren nach einem der Ansprüche 1 bis 5, wobei beim Stauchen oder Stauchen mit Prägen der keilförmigen Kontur gemäß Schritt c) von Anspruch 1 eine Kontur mit balligen Flanken, gesehen in eine horizontale Richtung senkrecht zur Förderrichtung (F), erzeugt wird.

8. Verfahren nach einem der Ansprüche 1 bis 7, wobei als Schere (2) eine Pendelschere verwendet wird.

9. Verfahren nach einem der Ansprüche 1 bis 7, wobei als Schere (2) eine fliegende Schere oder eine Trommelschere verwendet wird.

10. Verfahren nach einem der Ansprüche 1 bis 9, wobei als Schere (2) eine solche mit mechanischem Kurbelantrieb des oder der Scherenmesser (3, 5) verwendet wird.

11. Verfahren nach einem der Ansprüche 1 bis 10, wobei eine Verstellmöglichkeit des oberen und/oder unteren Werkzeuges zur Anpassung an die jeweils vorliegende Gießstrangdicke oder Zwischenbanddicke gegeben ist.

12. Verfahren nach einem der Ansprüche 1 bis 11, wobei eine Verstellmöglichkeit des oberen und/oder unteren Werkzeuges zum Einstellen der Mindeststauchdicke aufgrund der Greifbedingungsberechnung gegeben ist.

13. Verfahren nach einem der Ansprüche 1 bis 12, wobei von einem Walzwerkleitsystem (18) über ein Rechnernetzwerk (14) einer Maschinensteuerung (13) Mess- und/oder Prozessdaten und/oder daraus berechnete Größen übermittelt werden, wobei der Schneid- und/oder der Stauch- oder Stauch- und Prägevorgang von der Maschinensteuerung (13) in Abhängigkeit dieser Daten gesteuert wird.

## Claims

1. Method of separating a cast strip or an intermediate strip (1) by means of shears (2), comprising the following steps:
a) feeding a part of the fully hardened cast strip or intermediate strip (1) in conveying direction (F) of the cast strip or intermediate strip (1) to in front of the shears (2);
b) placing a first shears knife (3) of the shears (2) on one surface (4) of the cast strip or intermediate strip (1) and placing a second shears knife (5) of the shears (2) on the other surface (6) of the cast strip or intermediate strip (1) and performing a cut by execution of a relative motion of the two shears knives (3, 5), wherein at least one of the shears knives (3) is disposed in a forwardly displaced position;
c) upsetting or upsetting with stamping a wedge-shaped contour at that end of the cast strip or intermediate strip (1) which is disposed in front of the shears (2) in the conveying direction (F) in that an upsetting or an upsetting-and-stamping tool (7, 5) is pressed onto both surfaces (4, 6) of the cast strip or intermediate strip (1) so that the thickness (d) of the start of the cast strip or intermediate strip (1) is reduced relative to the thickness (D) of the cast strip or intermediate strip (1), wherein a part of the upsetting tool or an upsetting-and-stamping tool (5) is formed by one of the shears knives,
wherein a separate adjustment possibility of tool and knife is provided, whereby the upsetting or upsetting-and-stamping function can be switched on and off so that the shears are also usable just for cutting.

2. Method according to claim 1, wherein the upsetting or the upsetting with stamping of the wedge-shaped contour according to step c) of claim 1 is carried out, while the at least one shears knife (3) is still disposed in the forwardly displaced position according step b) of claim 1.

3. Method according to claim 2, wherein during the upsetting or the upsetting with stamping of the wedge-shaped contour according to step c) of claim 1 at least a part of the displaced material of the end of the cast strip or intermediate strip (1) is conveyed into a receiving space (8) present in one of the shears knives (5).

4. Method according to any one of claims 1 to 3, wherein after the upsetting or the upsetting with stamping of the wedge-shaped contour according to step c) of claim 1 the shears knife (3) disposed in the forwardly displaced position according to step b) of claim 1 is pivoted about a horizontal axis (a) perpendicular to the conveying direction (F) before the shears knife (3) is retracted to its initial position.

5. Method according to claim 4, wherein the pivot angle (α) is between -15° and 15°.

6. Method according to any one of claims 1 to 5, wherein during the upsetting or the upsetting with stamping of the wedge-shaped contour according to step c) of claim 1 a contour with straight flanks as seen in a horizontal direction perpendicular to the conveying direction (F) is produced.

7. Method according to any one of claims 1 to 5, wherein during the upsetting or the upsetting with stamping of the wedge-shaped contour according to step c) of claim 1 a contour with spherical flanks as seen in a horizontal direction perpendicular to the conveying direction (F) is produced.

8. Method according to any one of claims 1 to 7, wherein pendulating shears are used as shears (2).

9. Method according to any one of claims 1 to 7, wherein flying shears or drum shears are used as shears (2).

10. Method according to any one of claims 1 to 9, wherein shears with a mechanical crank drive of the shears knife or knives (3, 5) are used as shears (2).

11. Method according to any one of claims 1 to 10, wherein an adjustment possibility of the upper and/or lower tool for adaptation to the respective strip cast thickness or intermediate strip thickness is provided.

12. Method according to any one of claims 1 to 11, wherein an adjustment possibility of the upper and/or lower tool for setting the minimum upsetting thickness on the basis of grip state computation is provided.

13. Method according to any one of claims 1 to 12, wherein measurement and/or process data and/or variables calculated therefrom are communicated from a rolling mill management system (18) by way of a computer network (14) of a machine control (13), wherein the cutting and/or the upsetting or upsetting-and-stamping process is or are controlled by the machine control (13) in dependence on these data.

## Revendications

1. Procédé destiné au tronçonnement d'une barre de coulée ou d'une bande intermédiaire (1) au moyen d'une machine à cisailler (2), qui présente les étapes dans lesquelles :
a) on amène une partie de la barre de coulée ou de la bande intermédiaire (1), qui a fait l'objet d'une solidification complète, dans la direction de transport (F) de la barre de coulée ou de la bande intermédiaire (1) devant la machine à cisailler (2) ;
b) on place une première lame de cisaille (3) de la machine à cisailler (2) sur la première surface (4) de la barre de coulée ou de la bande intermédiaire (1) et on place une deuxième lame de cisaille (5) de la machine à cisailler (2) sur l'autre surface (6) de la barre de coulée ou de la bande intermédiaire (1) et on procède à une découpe par la mise en oeuvre d'un mouvement relatif des deux lames (3, 5) de la machine à cisailler; dans lequel au moins une des lames (3) de la machine à cisailler se trouve dans une position qu'elle occupe après l'avoir fait avancer ;
c) on procède à un écrasement ou à un écrasement avec façonnement d'un contour possédant une configuration cunéiforme à l'extrémité de la barre de coulée ou de la bande intermédiaire (1) qui se trouve avant la machine à cisailler (2) dans la direction de transport (F), par l'intermédiaire d'une compression d'un outil d'écrasement ou d'un outil d'écrasement et de façonnement (7, 5) sur les deux surfaces (4, 6) de la barre de coulée ou de la bande intermédiaire (1), d'une manière telle que l'on réduit l'épaisseur (d) de l'amorce de la barre de coulée ou de la bande intermédiaire (1) par rapport à l'épaisseur (D) de la barre de coulée ou de la bande intermédiaire (1) ; dans lequel on forme la première partie de l'outil d'écrasement ou un outil d'écrasement et de façonnement (5) à l'intervention d'une des lames de la machine à cisailler ; dans lequel on obtient une possibilité de positionnement séparée de l'outil et des lames, d'une manière telle que l'on peut activer et désactiver la fonction d'écrasement ou la fonction d'écrasement et de façonnement, tant et si bien que l'on peut également utiliser la machine à cisailler uniquement pour la découpe.

2. Procédé selon la revendication 1, dans lequel l'écrasement ou l'écrasement avec façonnement du contour possédant une configuration cunéiforme en conformité avec l'étape c) de la revendication 1, a lieu alors que ladite au moins une lame (3) de la machine à cisailler se trouve encore dans la position qu'elle occupe après l'avoir fait avancer, en conformité avec l'étape b) de la revendication 1.

3. Procédé selon la revendication 2, dans lequel, au cours de l'écrasement ou de l'écrasement avec façonnement du contour possédant une configuration cunéiforme en conformité avec l'étape c) de la revendication 1, au moins une partie de la matière de l'extrémité de la barre de coulée ou de la bande intermédiaire (1) qui a fait l'objet d'une compression, est transportée dans un espace de réception (8) qui se trouve dans une des lames (5) de la machine à cisailler.

4. Procédé selon l'une quelconque des revendications 1 à 3, dans lequel, après l'écrasement ou après l'écrasement avec façonnement du contour possédant une configuration cunéiforme en conformité avec l'étape c) de la revendication 1, on fait pivoter autour d'un axe horizontal (a) la lame (3) de la machine à cisailler qui se trouve dans la position qu'elle occupe après l'avoir fait avancer, en conformité avec l'étape b) de la revendication 1, l'axe en question étant perpendiculaire à la direction de transport (F), avant de rétracter la lame (3) de la machine à cisailler dans sa position de départ.

5. Procédé selon la revendication 4, dans lequel l'angle de pivotement (a) se situe entre -15° et 15°.

6. Procédé selon l'une quelconque des revendications 1 à 5, dans lequel, au cours de l'écrasement ou de l'écrasement avec façonnement du contour possédant une configuration cunéiforme en conformité avec l'étape c) de la revendication 1, on forme un contour qui comprend des flancs droits, lorsqu'on regarde dans une direction horizontale qui est perpendiculaire à la direction de transport (F).

7. Procédé selon l'une quelconque des revendications 1 à 5, dans lequel, au cours de l'écrasement ou de l'écrasement avec façonnement du contour possédant une configuration cunéiforme en conformité avec l'étape c) de la revendication 1, on forme un contour qui comprend des flancs bombés, lorsqu'on regarde dans une direction horizontale qui est perpendiculaire à la direction de transport (F).

8. Procédé selon l'une quelconque des revendications 1 à 7, dans lequel on utilise une machine à cisailler pendulaire à titre de machine à cisailler (2).

9. Procédé selon l'une quelconque des revendications 1 à 7, dans lequel on utilise une machine à cisailler volante ou en porte-à-faux ou une machine à cisailler rotative à titre de machine à cisailler (2).

10. Procédé selon l'une quelconque des revendications 1 à 9, dans lequel on utilise une machine à cisailler à entraînement mécanique du type à manivelle, de la lame ou des lames (3, 5) de la machine à cisailler, à titre de machine à cisailler (2).

11. Procédé selon l'une quelconque des revendications 1 à 10, dans lequel on obtient une possibilité de positionnement du moule supérieur et/ou du moule inférieur à des fins d'adaptation à l'épaisseur de la barre de coulée ou à l'épaisseur de la bande intermédiaire respectivement en vigueur.

12. Procédé selon l'une quelconque des revendications 1 à 11, dans lequel on obtient une possibilité de positionnement du moule supérieur et/ou du moule inférieur à des fins de réglage de l'épaisseur d'écrasement minimale sur base du calcul des conditions de saisie.

13. Procédé selon l'une quelconque des revendications 1 à 12, dans lequel on transmet à un système de commande (18) d'un laminoir, par l'intermédiaire d'un réseau d'ordinateurs (14) d'une commande de machine (13), des données de mesure et/ou de processus et/ou des valeurs calculées à partir des données en question ; dans lequel le processus de découpe et/ou d'écrasement ou d'écrasement et de façonnement est commandé par la commande de machine (13) en fonction de ces données.
